# EUROPEAN PATENT SPECIFICATION

(11) **EP 4 380 769 B1**
(45) Date of publication and mention of the grant of the patent: **10.09.2025**
(21) Application number: 22789705.5
(22) Date of filing: 31.07.2022
(51) Int. Cl.: B28B 1/00, B28B 1/14, B28B 23/02, B33Y 10/00, E04C 5/06, E04C 5/16, E04G 21/04

(54) **METHOD FOR MANUFACTURING A MODULE OF A BUILDING BY MEANS OF 3D CONCRETE PRINTING**
VERFAHREN ZUR HERSTELLUNG EINES MODULS EINES GEBÄUDES MITTELS 3D-BETONDRUCK
PROCÉDÉ DE FABRICATION D'UN MODULE DE CONSTRUCTION À L'AIDE D'UNE IMPRESSION DE BÉTON EN 3D

(30) Priority: 04.08.2021 NL 2028922
(43) Date of publication of application: 12.06.2024
(73) Proprietor: CyBe Construction BV, 5347 KM Oss (NL)
(72) Inventor: HENDRIKS, Lambertus Nicolaas, Oss (NL)
(74) Representative: Verhees, Godefridus Josephus Maria
(86) International application number: PCT/NL2022/050454
(87) International publication number: WO 2023/014219

(56) References cited:
- WO-A1-2018/230855
- WO-A1-2018/230855
- CN-A- 108 312 291
- CN-A- 108 312 291

## Description

### Technical field of the invention

The invention relates to a method for manufacturing a module of a building, the module comprising:
- a concrete slab, and
- at least one concrete cavity wall attached to the concrete slab, said cavity wall having two spaced leaves,
in which method the leaves of the cavity wall are manufactured by means of 3D concrete printing.

### Background of the invention

Such a method is known from CN108312291A. In this known method, a foundation is first formed at the location of the cavity walls and after printing the leaves of the cavity walls, vertical reinforcement cages are placed locally between these leaves and the space within these cages and immediately around them is filled with concrete in order to form culumns. Near the top of the cavity walls, floor slabs are arranged between the cavity walls, which will form the floor for a further building module of the building to be subsequently formed thereon. Reinforcement is applied to the floor slabs and then a layer is printed on the floor slabs. In this known method, said concrete slab is the ceiling of the building module or the floor of the module to be formed above it. The building modules manufactured according to this known method are not movable but form a direct part of the building under construction. The cavity walls and the top layer of the floor are printed one after the other.

### Summary of the invention

An object of the invention is to provide a method according to the preamble of claim 1, with which movable building modules can be manufactured in an inexpensive manner, so that a building can be built with them in a cheaper and faster manner. To this end, the method for manufacturing a building module according to the invention is characterized in that it comprises the steps of:
- 3D concrete printing of a formwork on a substrate for the concrete slab to be made and for the concrete beam to be made, and of the lower layers of the leaves of the cavity wall to be made,
- arranging a reinforcing wire mesh for the concrete slab and an elongated reinforcement wire basket for the beam on the substrate before or after printing the formwork, within the formwork or within the circumference of the formwork to be printed,
- 3D concrete printing of the remaining layers of the leaves of the cavity wall, and
- pouring concrete into the space within the formwork during or after printing of the remaining layers of the leaves of the cavity wall.

In the method according to the invention, the floor of the building module forms said concrete slab. This is in contrast to the known method where the ceiling of the building module forms the said concrete slab. By printing the formwork for the floor and the cavity walls in a continuous process and eventually also pouring the floor during the printing of the cavity walls, more modules can be produced per unit of time than according to the known method, which means that the 3D concrete printer is used more efficiently and the costs of using the 3D concrete printer are lower.

Because both the floor and the cavity walls are made of the building module, the building module can be moved. This is not the case with the known building module, which consists of the cavity walls and the floor connected thereto for the module above it, or the ceiling of the formed building module. In the method according to the invention, the cavity walls are printed next to beams which form a whole with the floor, so that the floor, the beams and the cavity walls form one solid whole. Fast-hardening concrete is preferably used for the beams and the floor.

An embodiment of the method according to the invention is characterized in that after pouring concrete into the space between the formwork, the formwork becomes part of the concrete slab and/or of the beam.

A further embodiment of the method according to the invention is characterized in that the printing of the formwork for the concrete slab and the printing of the lower layers of the cavity wall is carried out in a continuous (uninterrupted) 3D concrete printing process.

Yet another embodiment of the method according to the invention is characterized in that the formwork for the concrete slab and the lower layers of the cavity wall is printed in such a way that the lower layers of one of the leaves of the cavity wall form part of the formwork of the concrete slab.

Preferably, the printing of the formwork for the concrete slab and the printing of the lower layers of the cavity wall followed by the printing of the remaining layers of the cavity wall is carried out in a continuous (continuous) 3D concrete printing process.

An embodiment of the method according to the invention is characterized in that, after the cavity walls have been printed, columns are arranged in or against the cavity walls, which columss are attached to the reinforcement of the beams. With the 3D concrete printing of the cavity walls, only the leaves of the cavity walls are printed, whereby empty spaces are formed between the leaves. By attaching the columns directly to the reinforcement in the beams, a strong construction is obtained.

In order to be able to securely fasten the columns to the reinforcement in a simple manner, coupling plates are preferably attached to the reinforcement for the beams and the columns are attached to these coupling plates. These coupling plates are preferably attached to the reinforcement before the beams and the floor are cast, preferably before the reinforcement for the beams is placed on the substrate. By arranging coupling plates, the columns can be attached to the beams in a simple manner, for instance by means of bolts.

Preferably, at the locations where the columns are attached to the reinforcement for the beams, from the outside of the cavity walls to the reinforcement of the beams, the cavity walls are removed or the cavity walls are formed in such a way that recesses are formed in the cavity walls at these locations. This allows the columns to be placed within the outer boundary side of the cavity walls, so that they do not protrude.

In order to integrate the columns even more into the construction and to allow them to protrude even less or not, when printing the cavity walls, leaves of the cavity walls are printed, whereby at the locations where the columns are attached to the reinforcement for the beams, the leaf or leaves is/are printed in such a way that coves are formed in the cavity wall in which the columns can be placed. This allows the cavity walls to still be formed up to the edges of the floor while the columns do not protrude due to the presence in the formed coves.

In a further method according to the invention, the module further comprises a concrete column which is attached to the concrete slab, which column has a circumferential wall and the space within the circumferential wall is filled with concrete, in which method also the circumferential wall of the column is manufactured by means of 3D concrete printing. The further method is characterized in that the method further comprises the steps of:
- arranging on the substrate a reinforcing wire mesh for the concrete slab and an elongated reinforcing wire basket for the beam,
- arranging a support plate on the reinforcing wire basket or arranging a support provided with a support plate next to the reinforcing wire basket,
- 3D concrete printing of the circumferential wall of the column on the support plate,
- arranging an elongate reinforcing wire cage within the circumferential wall of the column, such that there is an entangled structure of wires of the elongate reinforcing wire cage and/or of wires of the reinforcing wire basket and/or of reinforcing rebars arranged before the reinforcing wire cage is installed, such that after pouring concrete into the formwork and inside the circumferential wall of the column the beam and the column are attached to each other via the reinforcements,
- pouring concrete into the space between the formwork during or after the 3D concrete printing of the remaining layers of the leaves of the cavity wall, and
- pouring concrete within the circumferential wall of the column.

An embodiment of the method according to the invention is characterized in that that before the supporting plate is arranged, angled reinforcing rebars provided with two legs standing at right angles to each other, each with a first of the legs are inserted into the reinforcement wire basket and the other, second leg is inserted through a hole in the support plate. In this way the beam and column to be formed can be firmly attached to each other in order to obtain a strong construction, so that the module can be moved relatively easily without additional support.

One way in which the supporting plate is properly supported is characterized in that before the supporting plate is arranged, angled reinforcing rebars, provided with two legs at right angles to each other, are each inserted into the reinforcing wire basket with a first of the legs and with the other second leg support the supporting plate. The second legs are herein held vertically and are preferably bent at right angles at the free end, wherein the bent parts carry the support plate.

In order to obtain a better attachment of the beam to be formed with the column to be formed, a further embodiment of the method according to the invention is characterized in that the support plate is U-shaped and the reinforcing wire cage is inserted through the opening within the U-shape and adjacent to the second legs of the reinforcing rebars. A firm attachment of the column to the beam can hereby be obtained. Preferably, the reinforcing wire cage is arranged along the second legs of the reinforcing rebars over a length of at least 40 cm. This eliminates the need to attach the reinforcing rebars to the reinforcing wire cage. The concrete to be poured afterwards ensures a sufficiently strong connection between the reinforcing rebars and the column. The same applies to the length over which the first legs of the reinforcing rebars are inserted into the reinforcing wire basket.

Another way of obtaining a strong attachment of the column to be formed to the beam to be formed is characterized in that the support plate has a rectangular shape, and when arranging the reinforcement wire cage free ends of reinforcement wires which extend in the longitudinal direction of the reinforcement wire cage, are inserted through further holes in the support plate. In this case, these free ends preferably extended over a distance of at least 40 cm along the second legs of the reinforcing rebars.

Yet another way of obtaining a strong attachment of the column to be formed to the beam to be formed is characterized in that the supporting plate has a rectangular shape and the reinforcing wire cage is arranged on the support plate and rests on the support plate. Preferably, the second legs of the reinforcing rebars are arranged along the reinforcing wire cage over a distance of at least 40 cm.

Yet another embodiment of the method according to the invention is characterized in that the support has a foot arranged on the substrate and being provided with a hole, and a vertical tube arranged around the hole and attached to the foot on which the supporting plate is located or around which the supporting plate provided with a center hole, is arranged. This tube can later be used to connect two modules on top of each other in vertical direction.

Preferably, the second legs of the reinforcing rebars or the vertical tube being provided with external screw threads on which a nut is arranged, the height of the support plate being adjusted after the mounting plate has been fitted by turning the nut or the nuts.

The invention also relates to a module manufactured according to the method described above, comprising:
- a poured concrete slab provided with a reinforcing wire mesh,
- a poured concrete beam attached to the concrete slab and being provided with an elongated reinforcing wire basket,
- a supporting plate located on or next to the concrete beam,
- a concrete column located on the support plate and being attached to the concrete plate and being provided with an elongate reinforcing wire cage, which column comprises a circumferential wall manufactured by means of 3D concrete printing, within which the reinforcing wire cage is present and in which concrete has been poured, and
- a cavity wall attached to the concrete slab, wherein the cavity wall has two spaced leaves which are manufactured by means of 3D concrete printing,
wherein the concrete beam and the concrete column are attached to each other via the reinforcing wire basket and the reinforcing wire cage and/or via reinforcing rebars.

An embodiment of the module according to the invention is characterized in that it furthermore comprises a support on which the supporting plate is present and which is located next to the concrete beam, with angled reinforcing rebars extending with one leg into the reinforcing wire basket and with the other, second leg extending longitudinally of the column in the reinforcing wire cage or below the supporting plate, the support further comprising a holed foot and a tube attached to the foot around the hole. Due to this support, the circumferential wall of the column to be printed can be supported better.

A favorable construction in which it is not necessary to attach the reinforcing rebars to the reinforcing wire basket and to the reinforcing wire cage is characterized in that the reinforcing rebars extend with the first leg over a distance of at least 40 cm in the reinforcing wire basket and with the other, second leg extend over a distance of at least 40 cm in the longitudinal direction of the column in the reinforcement wire cage or under the support plate.

A further embodiment of the module according to the invention is characterized in that the tube extends through a hole in the support plate and partly protrudes above the support plate and is provided with a number of holes in the side wall, the holes connecting with through-holed elements are mounted on the side wall of the tube, into which bolts are turned, which, upon further rotation, enter the tube in order to remove a rod possibly present in the tube clamp in the tube. This creates a provision with which two modules stacked on top of each other can be connected to each other in vertical direction.

Preferably, the part of the tube protruding above the support plate extends over a distance of at least 40 cm in the longitudinal direction of the column in the column so that the tube does not have to be fixed to the reinforcement wire cage in order to obtain a sufficiently strong connection.

In order to have good access to the bolts, an opening through which the bolts are accessible is preferably present in the circumferential wall of the column at the location of the bolts.

Furthermore, the invention relates to a building composed of a number of modules as described above, of which several modules are present on other modules, wherein in at least one column of a lower module a rod is present which partly protrudes from the column and extends into the tube of the support of the module present on this module and is clamped by the bolts.

### Brief description of the drawings

The invention will be further elucidated below on the basis of an exemplary embodiment of the method for manufacturing the building module according to the invention shown in the drawings. Wherein:
Figure 1 shows a 3D concrete printer for forming the module with reinforcement elements on a substrate;
Figure 2 shows the 3D concrete printer with a molded module;
Figure 3 shows the building module in top view;
Figure 4 shows the manner in which a number of building modules are coupled to each other;
Figure 5 shows two finished building modules being assembled into a unit;
Figure 6 shows a building module that can be used as an independent unit;
Figure 7 shows a simple module during production in which part of a cavity wall has been removed to accommodate a column in the module;
Figure 8 shows a simple module during production in which a cavity wall is formed such that a recess is crated for receiving a column in the module;
Figures 9-12 show different steps during the formation of a simple module;
Figure 13 shows a first embodiment of the support plate for the column supported by reinforcing rebars;
Figure 14 shows a second embodiment of the supporting plate as part of a support;
Figure 15 shows a third embodiment of the supporting plate supported by a support;
Figure 16 shows a fourth embodiment of the support plate arranged on a support and supported by reinforcing rebars;
Figure 17 shows a fifth embodiment of the support plate supported by reinforcing rebars and arranged around a support provided with a connecting rod;
Figure 18 shows the situation for connecting two modules of a building present one above the other;
Figure 19 shows the situation after connecting two modules of a building present one above the other; and
Figure 20 is an exploded view of the reinforcing wire baskets, reinforcing wire cage and support with supporting plate.

### Detailed description of the drawings

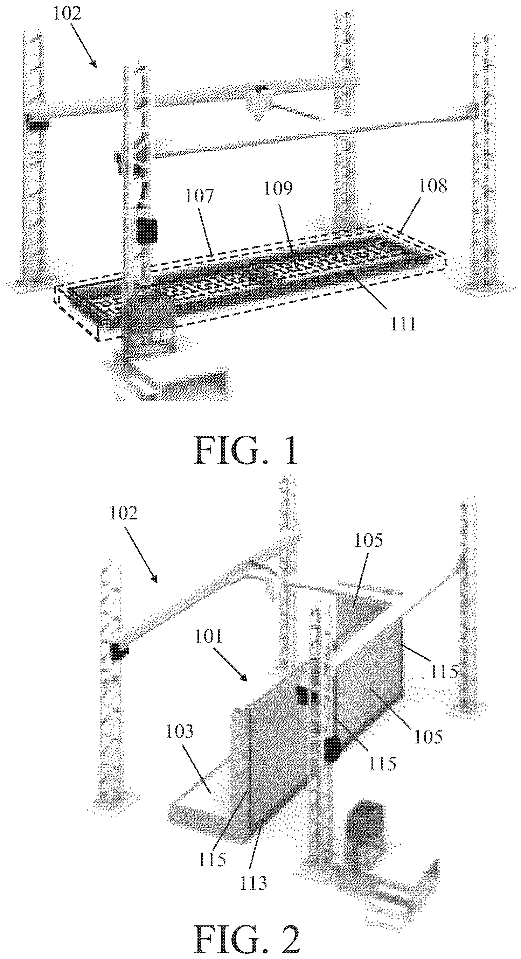

In an efficient construction method for a building, prefab construction modules are manufactured in a factory, which are placed on the construction site in the building under construction, where the construction module only needs to be coupled with the already present construction modules of the building under construction. For manufacturing the building module, a suitable substrate is first formed on which the building module can be manufactured. This can for instance be a plastic platform in which slots are present at the location where the beams are formed in the floor. These beams are thicker than the floor and protrude from the floor at the bottom of the floor to be formed. Figure 1 shows the 3D concrete printer 102, which is used inter alia for forming the cavity walls, wherein reinforcement baskets 111 for the beams to be formed have already been arranged on the substrate. At the ends of the three short reinforcement baskets and the two long reinforcement baskets, coupling plates are attached (welded) to the reinforcement baskets, which are provided with bolt holes so that the building modules can be attached to each other and the columns can be attached to the beams.

A formwork 107 of concrete for the floor around the reinforcement baskets and the lower layers of the cavity walls 108 (shown schematically with broken lines) are printed with the 3D concrete printer. This 3D concrete printer uses fast curing concrete so that at the end of printing one layer, the next layer can be printed directly on top of the printed layer. Reinforcement wire meshes 109 (indicated by broken lines) for the floor to be formed have been placed on the ground between the reinforcement baskets 111 for the beams.

After the printing of the formwork 107 and the lower layers 108 of the cavity walls, the 3D printing process continues continuously for printing the remaining layers of the cavity walls and at the same time the floor is poured. The latter also happens with fast-setting concrete. Figure 2 shows the situation after the floor 103 has been poured and the cavity walls 105 have been printed. Vertical steel columns 115 have also already been arranged in recesses in the cavity walls 105. These columns 115 are provided with coupling plates and are bolted to coupling plates already attached to the reinforcement baskets 111. The cavity wall 105 is formed in such a way that recesses are present in the cavity walls in line with the beams 113, so that the columns 115 can be fixed against the reinforcement baskets 111 without first having to make recesses in the cavity walls 105 at that location.

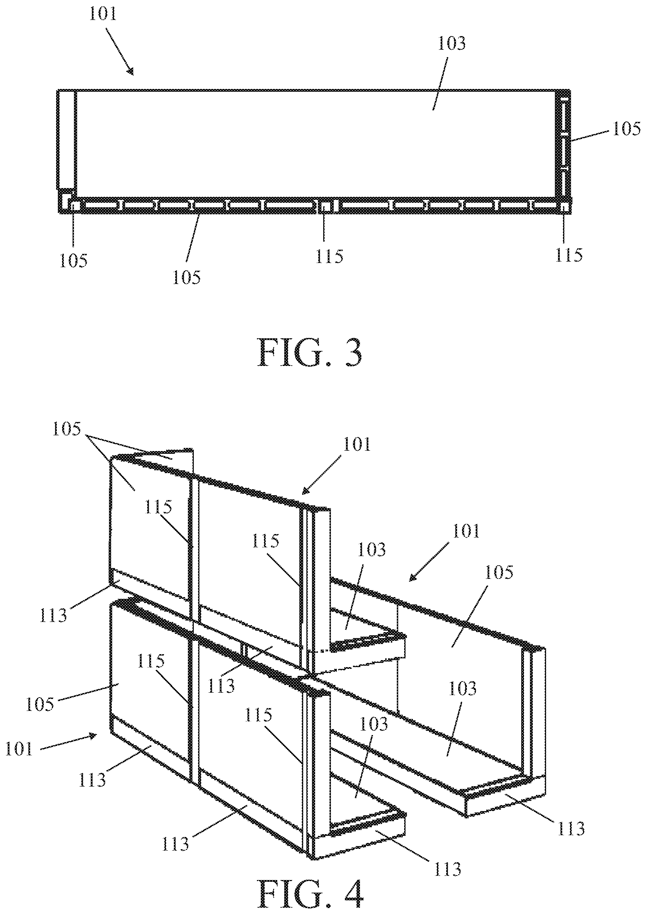

When printing the cavity walls 105, only the leaves of the cavity walls are printed. Figure 3 shows the building module 101 in top view, in which this can be clearly seen. At the location of the ends of the beams 113, the leaf is printed in such a way that recesses are formed in the cavity wall 105 in which the columns 115 can be inserted. Before the floor 103 is poured, pipes are installed and during the printing of the cavity walls 103, further pipes are placed in the cavity walls for, among other things, electrical cables, water supply, etc. After printing the cavity walls 103, insulation material is arranged in the hollow spaces between printed leaves of the cavity walls 105.

Figure 4 shows the manner in which a number of building modules 101 can be coupled together. The columns 115 can be attached to each other at the ends and the beams 113 can also be attached to each other end to end. In both cases, coupling plates provided with bolt holes were first attached to the beams and the reinforcement baskets so that the building modules can easily be bolted together.

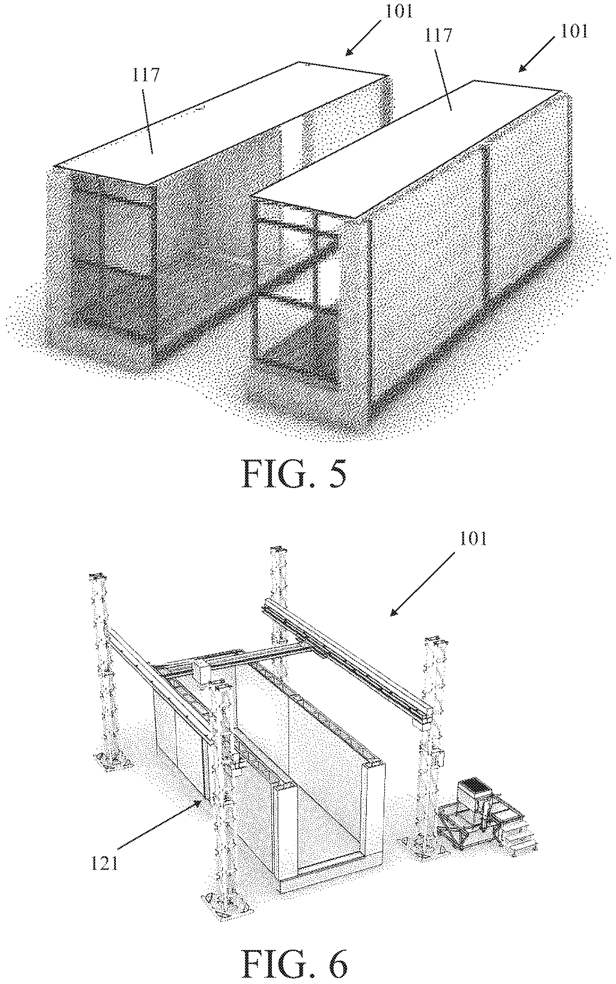

Before the building modules are transported to the building under construction, they are further finished, for example by tiling the walls where desired and installing kitchen or bathroom equipment and, if necessary, placing doors and windows. Preferably, two building modules are also coupled to each other in advance and provided with a (temporary) ceiling 117 that offers protection during transport. Figure 5 shows two fully finished building modules 101 which are attached to each other to form a unit. The building modules 101 are not attached to each other until they are on the construction site because the unit is too large to be transported by road. A permanent ceiling is applied to those building modules that will form the top layer of the building. This permanent ceiling can be installed at the factory or can be installed on site.

In Fig. 6, the printing of another building module 121 with the 3D printer 102 is shown. This building module 121 forms an independent unit and does not first have to be coupled with a further building module.

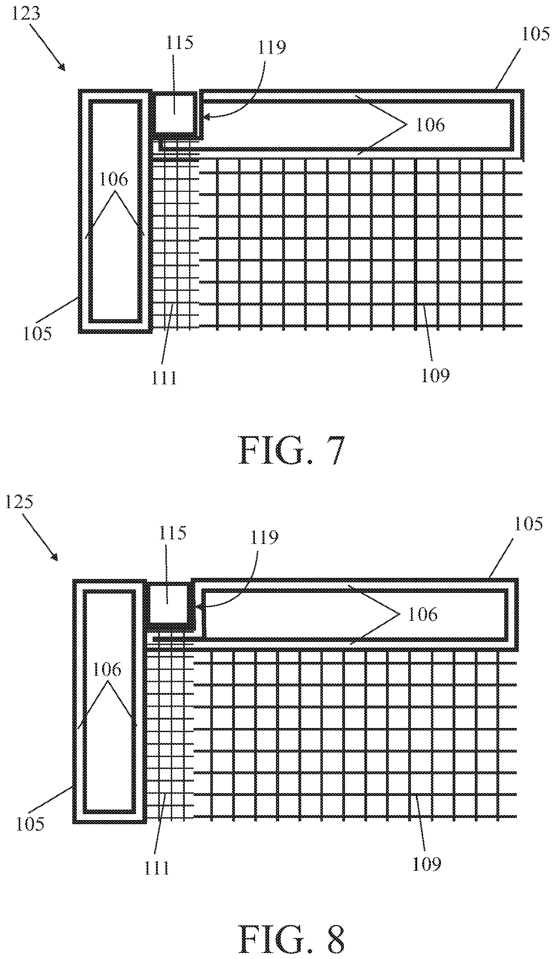

For clarification, figure 7 shows a simple building module 123 during production in which part of a cavity wall 105 has been removed to create a recess 119 for receiving a column 115 in the building module. The leaf 106 of the cavity wall 105 is removed up to the reinforcement basket 111 in front of the beam, so that the column 115 can be placed against the reinforcement basket 111 and can be attached thereto. The reinforcement basket 111 is preferably provided with a plate provided with threaded holes so that the column 115 can be screwed to the reinforcement cage 111 .

Also for clarification, figure 8 shows another simple building module 125 during production in which a cavity wall 105 is formed such that a recess 19 is formed for receiving a column 115 in the module. At the location where a column 115 is attached to the reinforcement basket 111 of the beam 113, the leaf 106 of the cavity wall 105 is 3D printed such that the cavity wall 105 has a recess 119 in which the column 115 can be fitted.

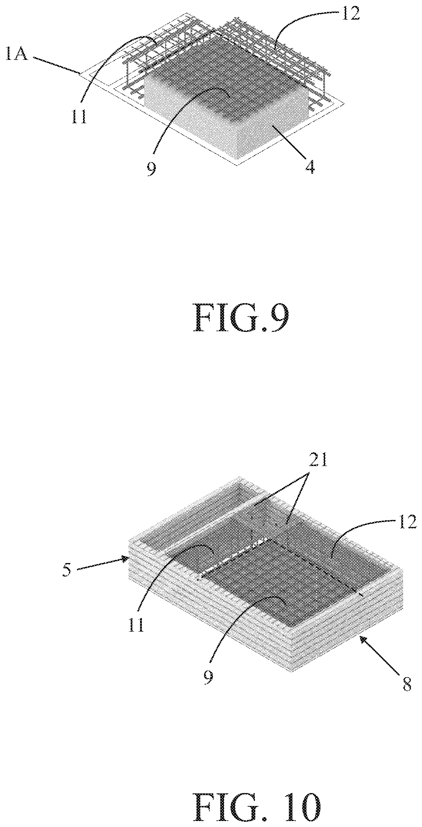

In figures 9-12, various steps during the formation of a simple module 1 are shown by way of example. In reality, the modules will be larger and have more cavity walls, beams and columns (see for example the module shown in figure 2). Figure 9 shows that the contours 1A of the module have been arranged on a substrate and a filler piece 4 has been placed, which piece is removed again after the module has been made. Reinforcement wire baskets 11 and 12 are placed next to the filling piece and a reinforcement wire mesh 9 is placed on the filling piece.

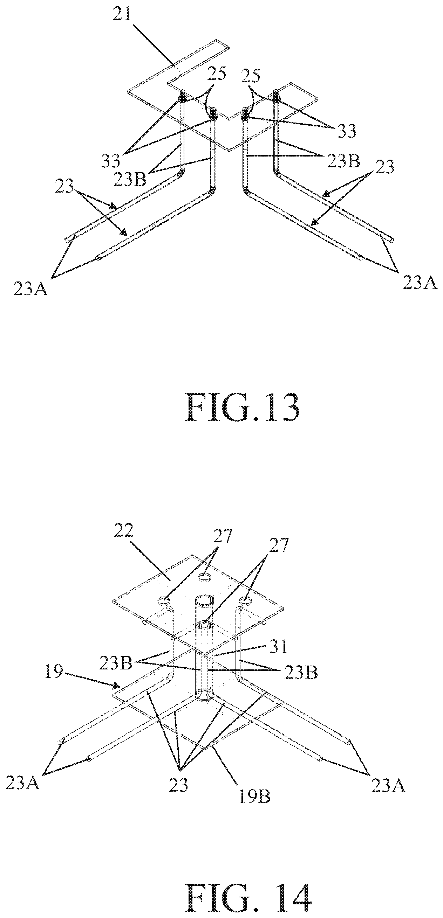

Figure 10 shows the situation after the formwork 8 has been arranged. This formwork is formed by means of 3D concrete printing as shown here. In this example, next to the formwork 8, the lower layers of a cavity wall 5 to be formed have been applied by means of 3D concrete printing. Adjacent to the ends of the reinforcing wire baskets 11 and 12 is a supporting plate 21 on which a column can be printed in a next step. This support plate 21 is arranged on the ends of angled reinforcing rebars 23 which are arranged in the reinforcing wire baskets 11 and 12 (this will be elucidated below with reference to Fig. 13).

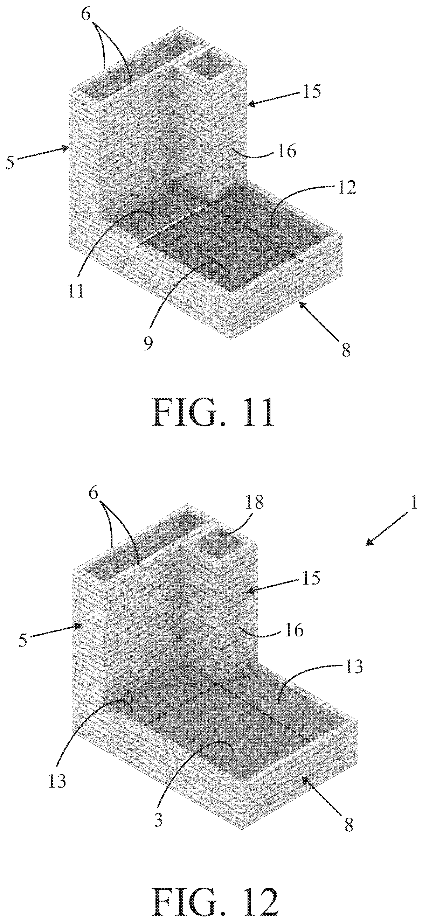

Figure 11 shows the situation after printing the leaves 6 of the cavity wall 5 on the previously printed layers of the cavity wall and the circumferential wall 16 of the column 15 on the support plate 21. Subsequently, a reinforcing wire cage 18 has been placed inside the circumferential wall 18 of the column 15 and concrete has been poured into the space within the circumferential wall 18 and within the formwork 8 for forming the beams 13, the concrete slab 3 and the column 15, after which the module 1 shown in figure 12 is obtained.

In figure 13 the supporting plate 21 with reinforcing rebars 23 is shown. The angled reinforcing rebars 23 each have two legs, a first leg 23A of which is inserted into the reinforcing wire baskets 12 and 13 and the second legs 23B project vertically upwards. The ends of these second legs 23B are provided with screw threads on which nuts 33 are turned. Holes 25 are present in the supporting plate 21 through which the second legs 23B project. The supporting plate 21 rests on the nuts 33 and is thus supported by the reinforcing rebars 23. The reinforcing rebars rest with the first legs 23A on the inner side of the underside of the reinforcing wire baskets. The height of the support plate 21 can be adjusted by turning the nuts 33. The support plate 21 has a U shape. After printing the circumferential wall of the column, the reinforcing wire cage is placed on the substrate, protruding through the opening between the legs of the U-shaped support plate 21. The lower part of the reinforcing wire cage extends adjacent to the second legs 23B of the reinforcing rebars 23. After the concrete has been poured, the beams and the column form a solid whole because the reinforcing rebars extend side by side over a large length.

Instead of being supported by reinforcing rebars, the supporting plate can also be part of a support that is placed on the substrate. Figure 14 shows a second embodiment of the support plate 22 as part of a support 19. The support 19 has a base plate 19B provided with a central hole, at the location of which a tube 31 is attached to the base plate 19B. The supporting plate 33 is hereby attached to the upper end of the tube 31. The reinforcing rebars 23 are present with the second legs 23B between the foot plate 19B and the supporting plate 22 of the support 19. In order to be able to fit between them, the second legs 23A are bent at right angles at the ends. Holes 27 are present in the support plate 22 through which ends of projecting ends of reinforcement wires of the reinforcement wire cage of the column protrude in order to be firmly anchored in the support 19 after the concrete has been poured, which ends are also firmly fixed to the beams via the reinforcing rebars that are also firmly anchored in the support.

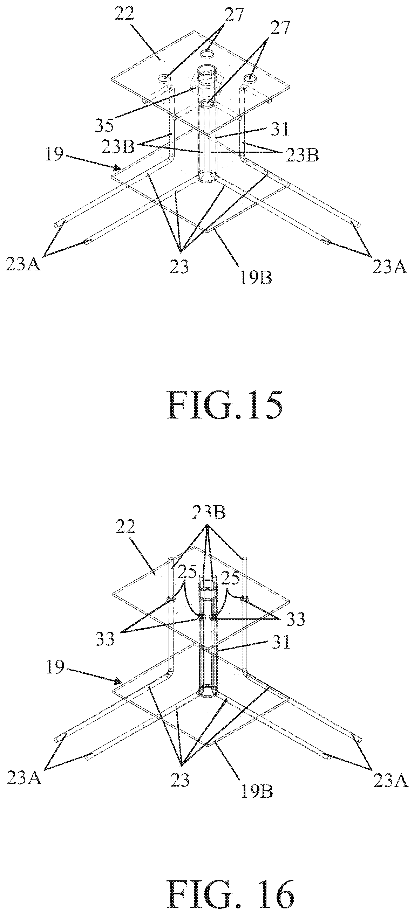

Instead of being attached to the tube 31, the support plate 22 can also be present loosely around the tube 31, see figure 15. In this embodiment, the free end of the tube 31 is provided with external screw thread on which a nut 35 is turned. The supporting plate 22 rests on this nut 35 and the height of the supporting plate 22 can be adjusted by turning this nut 35.

The angled ends of the second legs 23B of the reinforcing rebars 23 can also support the support plate 22 in the same way as they also support the support plate 21 in figure 13. This is shown in figure 16. The second legs 23B are provided with screw thread on which nuts 35 are turned and protrude through holes 25 in the support plate 22. In this case, the reinforcing rebars 23 can rest on the foot plate 19B of the support 19. Here, the tube 31 of the support 19 extends through a central hole in the support plate 22. The reinforcement wire cage of the column rests on the wire plate 22. In order to obtain a sufficiently strong attachment of the column to the beams, the second legs 23B of the reinforcing rebars 23 project sufficiently far above the support plate 22 to protrude a sufficient length into the reinforcing wire cage of the column to obtain a strong connection.

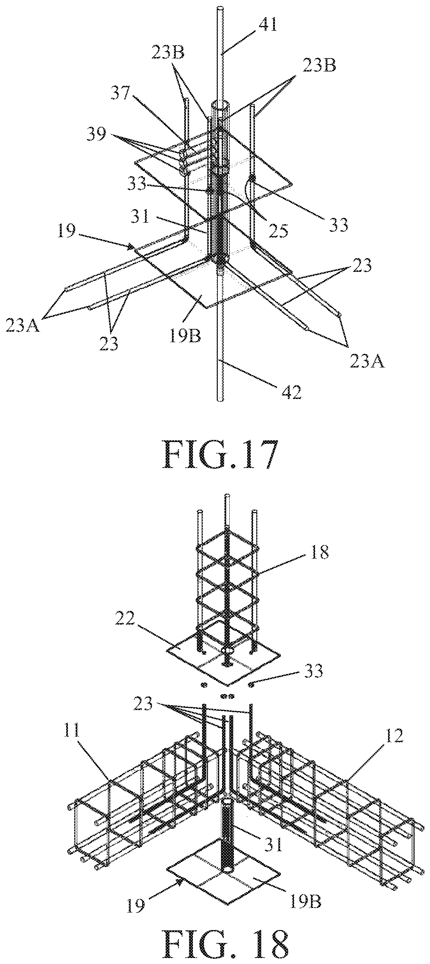

In figure 17 the construction shown in figure 16 is shown again, but now with an extended tube 31. A connecting rod 41 extends through the tube, which is attached to a rod 42 which is attached in a column of a module being below. The tube 31 is provided on the part projecting above the support plate 22 with a number of holes in the side wall. Through-holed elements 37 which are attached to the side wall of the tube 31 adjoin these holes. These through holes are provided with internal screw thread into which bolts 39 are screwed. When these bolts 39 are tightened, the rod 41 is clamped against the inside of the tube 31.

For clarification, figure 18 shows an exploded view of the reinforcing wire baskets 11 and 12, the reinforcing wire cage 18, the support 19 with supporting plate 22 and the reinforcing rebars 23.

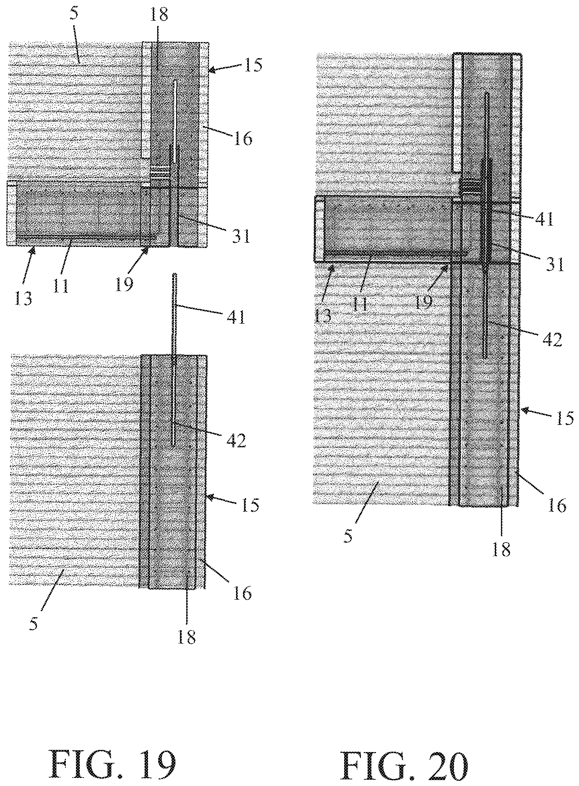

Figures 19 and 20 show the connection of two modules of a building present one above the other. A rod 42 is anchored in the column 15 of the lower module. A connecting rod 41 is attached to this rod 42, see figure 13. The upper module is lowered to the lower module with the tube 31 over this connecting rod 41 to the lower module. When being on the lower module the connecting rod 41 protrudes into the tube 31, see figure 14. At the location of the bolts 39 in the elements 37 fixed to the tube 31, an opening 43 is present in the circumferential wall 18 of the column 15 of the upper module. The bolts are accessible via this opening 43 and the connecting rod 41 can be clamped firmly in the tube 31, with which the two modules are fixed to each other in vertical direction.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Method for manufacturing a module (1; 101) of a building, the module (1; 101) comprising:
- a concrete slab (3; 103), and
- at least one concrete cavity wall (5; 105) attached to the concrete slab (3; 103), said cavity wall (5; 105) having two spaced leaves (6; 106), in which method the leaves (6; 106) of the cavity wall (5; 105) are manufactured by means of 3D concrete printing,
**characterized in that** the module (1; 101) further comprises at least one concrete beam (13; 113) fixed to the concrete slab (3; 103), and **in that** the method comprises the steps of:
- 3D concrete printing of a formwork (7; 107) on a substrate for the concrete slab (3; 103) to be made and for the concrete beam (13; 113) to be made, and of the lower layers of the leaves (6; 106 ) of the cavity wall (5; 105) to be made,
- arranging a reinforcing wire mesh (9; 109) for the concrete slab (3; 103) and an elongated reinforcement wire basket (11; 111) for the beam (13; 113) on the substrate before or after printing the formwork (7; 107), within the formwork (7; 107) or within the circumference of the formwork to be printed,
- 3D concrete printing of the remaining layers of the leaves (6; 106) of the cavity wall (5; 105), and
- pouring concrete into the space within the formwork (7; 107) during or after printing of the remaining layers of the leaves (6; 106) of the cavity wall (5; 105).

2. Method according to claim 1, **characterized in that** the printing of the formwork for the concrete slab and of the lower layers of the cavity wall is carried out in a continuous 3D concrete printing process.

3. Method according to claim 1 or 2, **characterized in that** the formwork for the concrete slab and the lower layers of the cavity wall are printed in such a way that the lower layers of one of the leaves of the cavity wall is part of the formwork of the concrete slab.

4. Method according to any one of the preceding claims, **characterized in that**, after the cavity walls (105) have been printed, columns (115) are arranged in or against the cavity walls (105), which columns (115) are attached to the reinforcement wire basket (111) of the beams (113).

5. Method according to claim 4, **characterized in that** coupling plates are fastened to the reinforcement wire basket (111) for the beams (113) and the columns (115) are fastened to these coupling plates.

6. Method according to claim 5, **characterized in that** at the locations where the columns (115) are attached to the reinforcement wire basket (111) for the beams (113), from the outside of the cavity walls (105) up to the reinforcement wire basket (111) of the beams (113) the cavity walls (105) are removed or when the printed leaves of the cavity walls (105) are printed, whereby at the places where the columns (115) are attached to the reinforcement wire basket (111) for the beams (113) the leave or leaves are printed in such a way that recesses are formed in the wall (105) in which the columns (115) can be placed.

7. Method according to any one of the preceding claims 1-3, wherein the module (1) further comprises a concrete column (15) attached to the concrete slab (3), which column (15) has a circumferential wall (16) and the space inside the circumferential wall is filled with concrete, in which method also the circumferential wall (16) of the column (15) is manufactured by means of 3D concrete printing, **characterized in that** the method further comprises the steps of:
- arranging on the substrate a reinforcing wire mesh (9) for the concrete slab (3) and an elongated reinforcing wire basket (11) for the beam (13),
- arranging a support plate on the reinforcing wire basket (11) or arranging a support (19) provided with a support plate (21) next to the reinforcing wire basket (11),
- 3D concrete printing of the circumferential wall (16) of the column (15) on the support plate (21; 22),
- arranging an elongate reinforcing wire cage (18) within the circumferential wall (16) of the column (15), such that there is an entangled structure of wires of the elongate reinforcing wire cage (18) and/or of wires of the reinforcing wire basket (11) and/or of reinforcing rebars (23) arranged before the reinforcing wire cage (18) is installed, such that after pouring concrete into the formwork (7) and inside the circumferential wall (16) of the column (15) the beam (13) and the column (15) are attached to each other via the reinforcements (11, 18, 23),
- pouring concrete into the space between the formwork (7) during or after the 3D concrete printing of the remaining layers of the leaves (6) of the cavity wall (5), and
- pouring concrete within the circumferential wall (16) of the column (15).

8. Method according to claim 7, **characterized in that** before the supporting plate (21; 22) is arranged, angled reinforcing rebars (23) provided with two legs (23A, 23B) standing at right angles to each other, each with a first of the legs (23A) are inserted into the reinforcement wire basket (11) and the other, second leg (23B) is inserted through a hole (25) in the support plate (21; 22) or the other, second leg (23B) supports the support plate (22).

9. Method according to claim 8, **characterized in that** the support plate (21) is U-shaped and the reinforcing wire cage (18) is arranged through the opening within the U-shape and adjacent to the second legs (23B) of the reinforcing rebars (23), or the support plate (22) has a rectangular shape and, when arranging the reinforcement wire cage (18) free ends of reinforcement wires (23) which extend in the longitudinal direction of the reinforcement wire cage (18), said free ends of the reinforcement wires (23) are inserted through further holes (27) in the support plate (22), or the support plate (22) has a rectangular shape and the reinforcing wire cage (18) is arranged on the support plate (22) and rests on the support plate (22).

10. Method according to any one of the preceding claims 7-9, **characterized in that** the support (19) has a foot (29) arranged on the substrate and being provided with a hole, and a vertical tube (31) arranged around the hole and attached to the foot (29) on which the supporting plate (21) is located or around which the supporting plate (21) provided with a center hole is arranged.

11. Module manufactured according to the method according to any one of the preceding claims 7-10, comprising:
- a poured concrete slab (3) provided with a reinforcing wire mesh (9),
- a poured concrete beam (13) attached to the concrete slab (3) and being provided with an elongated reinforcing wire basket (11),
- a supporting plate (21) located on or next to the concrete beam (13),
- a concrete column (15) located on the support plate (21) and being attached to the concrete plate (3) and being provided with an elongate reinforcing wire cage (18), which column (15) comprises a circumferential wall manufactured by means of 3D concrete printing, within which the reinforcing wire cage (18) is present and in which concrete has been poured, and
- a cavity wall (5) attached to the concrete slab (3), wherein the cavity wall (5) has two spaced leaves (6) which are manufactured by means of 3D concrete printing,
wherein the concrete beam (13) and the concrete column (15) are attached to each other via the reinforcing wire basket (11) and the reinforcing wire cage (18) and/or via reinforcing rebars (23).

12. Module according to claim 11, **characterized in that** it further comprises a support (19) on which the supporting plate (21) is present and which is located next to the concrete beam (13), wherein angled reinforcing rebars (23) are arranged with a first extending leg (23A) in the reinforcement wire cage (11) and extending with the other, second leg (23B) in the longitudinal direction of the column (15) in the reinforcement wire cage (18) or under the support plate (21), which support (19) further comprises a foot (29) provided with a hole and a tube (31) attached to the foot around the hole.

13. Module according to claim 12, **characterized in that** the tube (31) extends through a hole in the support plate (22) and partly protrudes above the support plate and is provided with a number of holes in the side wall, the holes connecting with through-holed elements (37) are mounted on the side wall of the tube (31), into which bolts (39) are turned, which, upon further rotation, enter the tube (31) in order to remove a rod (41) possibly present in the tube clamp in the tube.

14. Module according to claim 13, **characterized in that** an opening (43) is provided in the circumferential wall (16) of the column (15) at the location of the bolts (39) through which opening the bolts are accessible.

15. Building comprising a number of modules according to claim 13 or 14, of which several modules (1) are present on other modules, wherein in at least one column (15) of a lower module a rod (41) is present which partly protrudes from the column and extends into the tube (31) of the support (19) of the module present on this module and is clamped by the bolts (39).

## Patentansprüche

1. Verfahren zur Herstellung eines Gebäudemoduls (1; 101), wobei das Modul (1; 101) Folgendes umfasst:
- eine Betonplatte (3; 103) und
- mindestens eine an der Betonplatte (3; 103) befestigte Betonhohlwand (5; 105), wobei die Hohlwand (5; 105) zwei beabstandete Wände (6; 106) aufweist,
bei diesem Verfahren werden die Wände (6; 106) der Hohlwand (5; 105) mittels 3D-Betondruck hergestellt,
**dadurch gekennzeichnet, dass** das Modul (1; 101) außerdem mindestens einen an der Betonplatte (3; 103) befestigten Betonträger (13; 113) umfasst, wobei das Verfahren die folgenden Schritte umfasst:
- 3D-Betondruck einer Schalung (7; 107) auf einem Untergrund für die herzustellende Betonplatte (3; 103) und den Betonträger (13; 113) und der unteren Schichten der Wände (6; 106) der herzustellenden Hohlwand (5; 105),
- Anordnen eines Bewehrungsdrahtgeflechts (9; 109) für die Betonplatte (3; 103) und eines länglichen Bewehrungsdrahtkorbs (11; 111) für den Träger (13; 113) auf dem Untergrund vor oder nach dem Drucken der Schalung (7; 107), innerhalb der Schalung (7; 107) oder innerhalb des Umfangs der zu druckenden Schalung,
- 3D-Betondruck der restlichen Schichten der Wände (6; 106) der Hohlwand (5; 105) und
- Einfüllen von Beton in den Raum innerhalb der Schalung (7; 107) während oder nach dem Drucken der restlichen Schichten der Wände (6; 106) der Hohlwand (5; 105).

2. Verfahren nach Anspruch 1, **dadurch gekennzeichnet, dass** der Druck der Schalung für die Betonplatte und der unteren Schichten der Hohlwand in einem kontinuierlichen 3D-Betondruckverfahren erfolgt.

3. Verfahren nach Anspruch 1 oder 2, **dadurch gekennzeichnet, dass** die Schalung für die Betonplatte und die unteren Schichten der Hohlwand so gedruckt werden, dass die unteren Schichten einer der Schalungen der Hohlwand Teil der Schalung der Betonplatte sind.

4. Verfahren nach einem der vorhergehenden Ansprüche, **dadurch gekennzeichnet, dass** nach dem Druck der Hohlwände (105) Stützen (115) in oder an den Hohlwänden (105) angeordnet werden, die am Bewehrungsdrahtkorb (111) der Träger (113) befestigt sind.

5. Verfahren nach Anspruch 4, **dadurch gekennzeichnet, dass** am Bewehrungsdrahtkorb (111) für die Träger (113) Verbindungsplatten befestigt werden und die Stützen (115) an diesen Verbindungsplatten befestigt werden.

6. Verfahren nach Anspruch 5, **dadurch gekennzeichnet, dass** an den Stellen, an denen die Stützen (115) am Bewehrungsdrahtkorb (111) für die Träger (113) befestigt sind, von der Außenseite der Hohlwände (105) bis zum Bewehrungsdrahtkorb (111) der Träger (113) die Hohlwände (105) entfernt werden oder die bedruckten Wände der Hohlwände (105) bedruckt werden, dabei werden an den Stellen, an denen die Stützen (115) am Bewehrungsdrahtkorb (111) für die Träger (113) befestigt sind, die Wände so bedruckt, dass in der Hohlwand (105) Aussparungen entstehen, in denen die Stützen (115) platziert werden können.

7. Verfahren nach einem der vorhergehenden Ansprüche 1-3, wobei das Modul (1) zusätzlich eine an der Betonplatte (3) befestigte Betonstütze (15) mit einer umlaufenden Wand (16) umfasst, deren Raum mit Beton gefüllt ist, wobei auch die umlaufende Wand (16) der Stütze (15) mittels 3D-Betondruck hergestellt wird, wobei das Verfahren außerdem die folgenden Schritte umfasst:
- Anordnen eines Bewehrungsdrahtgeflechts (9) für die Betonplatte (3) und eines länglichen Bewehrungsdrahtkorbs (11) für den Träger (13) auf dem Untergrund,
- Anordnen einer Stützplatte auf dem Bewehrungsdrahtkorb (11) oder Anordnen einer mit einer Stützplatte (21) versehenen Stütze (19) neben dem Bewehrungsdrahtkorb (11),
- 3D-Betondruck der umlaufenden Wand (16) der Stütze (15) auf der Stützplatte (21; 22),
- Anordnen eines länglichen Bewehrungsdrahtkorbs (18) innerhalb der Umfangswand (16) der Säule (15), sodass eine verwickelte Struktur aus den Drähten des länglichen Bewehrungsdrahtkorbs (18) und/oder den Drähten des Bewehrungsdrahtkorbs (11) und/oder den Bewehrungsstäben (23) entsteht, die vor dem Einbau des Bewehrungsdrahtkorbs (18) angeordnet werden, sodass nach dem Eingießen des Betons in die Schalung (7) und innerhalb der Umfangswand (16) der Säule (15) der Träger (13) und die Säule (15) über die Bewehrungen (11, 18, 23) miteinander verbunden sind.
- Eingießen von Beton in den Raum zwischen der Schalung (7) während oder nach dem 3D-Betondruck der verbleibenden Schichten der Wände (6) der Hohlwand (5) und
- Eingießen von Beton in die Umfangswand (16) der Säule (15).

8. Verfahren nach Anspruch 7, **dadurch gekennzeichnet, dass** vor dem Anordnen der Stützplatte (21; 22) abgewinkelte Bewehrungsstäbe (23) mit zwei rechtwinklig zueinander stehenden Schenkeln (23A, 23B) in den Bewehrungsdrahtkorb (11) eingesetzt werden, wobei jeweils ein erster Schenkel (23A) in den Bewehrungsdrahtkorb (11) eingesetzt wird und der andere, zweite Schenkel (23B) durch eine Öffnung (25) in der Trägerplatte (21; 22) gesteckt wird oder der andere, zweite Schenkel (23B) die Trägerplatte (22) stützt.

9. Verfahren nach Anspruch 8, **dadurch gekennzeichnet, dass** die Trägerplatte (21) U-förmig ist und der Bewehrungsdrahtkorb (18) durch die Öffnung innerhalb der U-Form und neben den zweiten Schenkeln (23B) der Bewehrungsstäbe (23) angeordnet wird, oder die Trägerplatte (22) rechteckig ist und beim Anordnen des Bewehrungsdrahtkorbs (18) freie Enden der Bewehrungsdrähte (23), die sich in Längsrichtung des Bewehrungsdrahtkorbs (18) erstrecken, durch weitere Öffnungen (27) in der Trägerplatte (22) gesteckt werden, oder die Trägerplatte (22) rechteckig ist und der Bewehrungsdrahtkorb (18) auf der Trägerplatte (22) angeordnet wird und auf dieser aufliegt.

10. Verfahren nach einem der vorhergehenden Ansprüche 7-9, **dadurch gekennzeichnet, dass** die Stütze (19) einen auf dem Untergrund angeordneten Fuß (29) mit einem Loch und ein um das Loch herum angeordnetes und am Fuß (29) befestigtes vertikales Rohr (31) aufweist, auf dem sich die Stützplatte (21) befindet oder um das herum die mit einem Mittelloch versehene Stützplatte (21) angeordnet ist.

11. Modul, hergestellt nach dem Verfahren gemäß einem der vorhergehenden Ansprüche 7-10, bestehend aus:
- einer gegossenen Betonplatte (3), die mit einem Bewehrungsdrahtgitter (9) versehen ist,
- einem gegossenen Betonträger (13), der an der Betonplatte (3) befestigt ist und einen länglichen Bewehrungsdrahtkorb (11) aufweist,
- einer Stützplatte (21), die auf oder neben dem Betonträger (13) angeordnet ist,
- einer Betonstütze (15), die auf der Stützplatte (21) angeordnet ist, an der Betonplatte (3) befestigt ist und einen länglichen Bewehrungsdrahtkorb (18) aufweist, die Stütze (15) weist eine mittels 3D-Betondruck hergestellte Umfangswand auf, in der sich der Bewehrungsdrahtkorb (18) befindet und in die Beton gegossen wurde, und
- einer an der Betonplatte (3) befestigten Hohlwand (5), wobei die Hohlwand (5) zwei beabstandete, mittels 3D-Betondruck hergestellte Wände (6) aufweist,
wobei der Betonträger (13) und die Betonstütze (15) über den Bewehrungsdrahtkorb (11) und den Bewehrungsdrahtkorb (18) und/oder über Bewehrungsstäbe (23) miteinander verbunden sind.

12. Modul nach Anspruch 11, **dadurch gekennzeichnet, dass** es zusätzlich eine Stütze (19) mit der Stützplatte (21) umfasst, die sich neben dem Betonträger (13) befindet, wobei die abgewinkelten Bewehrungsstäbe (23) mit einem ersten Schenkel (23A) im Bewehrungsdrahtkorb (11) und mit dem zweiten Schenkel (23B) in Längsrichtung der Stütze (15) im Bewehrungsdrahtkorb (18) oder unter der Stützplatte (21) angeordnet sind, wobei die Stütze (19) außerdem einen Fuß (29) umfasst mit einer Bohrung und ein um die Bohrung herum am Fuß befestigtes Rohr (31).

13. Modul nach Anspruch 12, **dadurch gekennzeichnet, dass** das Rohr (31) durch eine Öffnung in der Trägerplatte (22) verläuft und teilweise über diese hinausragt, wobei die Seitenwand mehrere Öffnungen aufweist, die mit Durchgangselementen (37) an der Seitenwand des Rohrs (31) verbunden sind, in diese sind Bolzen (39) eingedreht, die bei weiterer Drehung in das Rohr (31) eindringen, um eine eventuell in der Rohrklemme vorhandene Stange (41) aus dem Rohr zu entfernen.

14. Modul nach Anspruch 13, **dadurch gekennzeichnet, dass** in der Umfangswand (16) der Säule (15) an der Stelle der Bolzen (39) eine Öffnung (43) vorgesehen ist, durch die die Bolzen zugänglich sind.

15. Gebäude, das eine Anzahl von Modulen gemäß Anspruch 13 oder 14 umfasst, von denen mehrere Module (1) auf anderen Modulen vorhanden sind, wobei in mindestens einer Säule (15) eines unteren Moduls eine Stange (41) vorhanden ist, die teilweise aus der Säule herausragt und in das Rohr (31) der Stütze (19) des auf diesem Modul vorhandenen Moduls hineinreicht und durch die Bolzen (39) festgeklemmt ist.

## Revendications

1. Procédé de fabrication d'un module (1 ; 101) de bâtiment, ledit module (1 ; 101) comprenant :
- une dalle en béton (3 ; 103), et
- au moins un mur creux en béton (5 ; 105) fixé à la dalle en béton (3 ; 103), ledit mur creux (5 ; 105) comportant deux parois espacées (6 ; 106),
dans ce procédé, les parois (6 ; 106) du mur creux (5 ; 105) sont fabriquées par impression 3D de béton,
**caractérisé en ce que** le module (1 ; 101) comprend en outre au moins une poutre en béton (13 ; 113) fixée à la dalle en béton (3 ; 103), et **en ce que** le procédé comprend les étapes suivantes :
- impression 3D d'un coffrage (7 ; 107) sur un substrat destiné à la dalle en béton (3 ; 103) à réaliser, la poutre en béton (13 ; 113) à réaliser et les couches inférieures des parois (6 ; 106) du mur creux (5 ; 105) à réaliser ;
- disposition d'un treillis métallique d'armature (9 ; 109) pour la dalle en béton (3 ; 103) et d'un panier métallique d'armature allongé (11 ; 111) pour la poutre (13 ; 113) sur le support avant ou après l'impression du coffrage (7 ; 107), à l'intérieur du coffrage (7 ; 107) ou sur le pourtour du coffrage à imprimer ;
- impression 3D du béton des couches restantes des parois (6 ; 106) du mur creux (5 ; 105) ; et
- coulage du béton dans l'espace à l'intérieur du coffrage (7 ; 107) pendant ou après l'impression des couches restantes des parois (6 ; 106) du mur creux (5 ; 105).

2. Procédé selon la revendication 1, **caractérisé en ce que** l'impression du coffrage de la dalle en béton et des couches inférieures du mur creux est réalisée selon un procédé d'impression 3D continue du béton.

3. Procédé selon la revendication 1 ou 2, **caractérisé en ce que** le coffrage de la dalle en béton et les couches inférieures du mur creux sont imprimés de telle sorte que les couches inférieures d'une des parois du mur creux fassent partie du coffrage de la dalle en béton.

4. Procédé selon l'une quelconque des revendications précédentes, **caractérisé en ce qu'**après l'impression des mur creuses (105), des colonnes (115) sont disposées dans ou contre les mur creuses (105), lesquelles colonnes (115) sont fixées au panier de fils d'armature (111) des poutres (113).

5. Procédé selon la revendication 4, **caractérisé en ce que** des plaques d'accouplement sont fixées au panier de fils d'armature (111) des poutres (113) et les poteaux (115) sont fixés à ces plaques d'accouplement.

6. Procédé selon la revendication 5, **caractérisé en ce qu'**aux endroits où les poteaux (115) sont fixés au panier de fils d'armature (111) des poutres (113), depuis l'extérieur des mur creuses (105) jusqu'au panier de fils d'armature (111) des poutres (113), les mur creuses (105) sont retirées ou les parois imprimées des mur creuses (105) sont imprimées, de sorte qu'aux endroits où les poteaux (115) sont fixés au panier de fils d'armature (111) des poutres (113), la ou les feuilles sont imprimées de manière à former des évidements dans la mur creuses (105) pour y placer les poteaux (115).

7. Procédé selon l'une quelconque des revendications 1 à 3 précédentes, dans lequel le module (1) comprend en outre une colonne en béton (15) fixée à la dalle en béton (3), cette colonne (15) présente une paroi périphérique (16) et l'espace intérieur de cette paroi est rempli de béton, dans ce procédé, la paroi périphérique (16) de la colonne (15) est également fabriquée par impression 3D de béton, le procédé comprend en outre les étapes suivantes :
- disposition sur le substrat d'un treillis métallique d'armature (9) pour la dalle en béton (3) et d'un panier métallique d'armature allongé (11) pour la poutre (13) ;
- disposition d'une plaque de support sur le panier métallique d'armature (11) ou disposition d'un support (19) muni d'une plaque de support (21) à côté du panier métallique d'armature (11) ;
- impression 3D de la paroi périphérique (16) de la colonne (15) sur la plaque de support (21 ; 22),
- disposition d'une cage de fils d'armature allongée (18) à l'intérieur de la paroi périphérique (16) du poteau (15), de sorte qu'une structure enchevêtrée de fils de la cage de fils d'armature allongée (18) et/ou de fils du panier de fils d'armature (11) et/ou de barres d'armature (23) soit formée avant la mise en place de la cage de fils d'armature (18). Ainsi, après coulage du béton dans le coffrage (7) et à l'intérieur de la paroi périphérique (16) du poteau (15), la poutre (13) et le poteau (15) sont fixés l'un à l'autre par les armatures (11, 18, 23),
- coulage du béton dans l'espace entre les coffrages (7) pendant ou après l'impression 3D des couches restantes des lames (6) du mur creux (5), et
- coulage du béton à l'intérieur de la paroi périphérique (16) du poteau (15).

8. Procédé selon la revendication 7, **caractérisé en ce qu'**avant la mise en place de la plaque de support (21 ; 22), des barres d'armature coudées (23) munies de deux branches (23A, 23B) perpendiculaires l'une à l'autre, chacune avec une première branche (23A) étant insérée dans le panier de fils d'armature (11) et l'autre branche (23B) étant insérée à travers un trou (25) de la plaque de support (21 ; 22) ou l'autre branche (23B) soutient la plaque de support (22).

9. Procédé selon la revendication 8, **caractérisé en ce que** la plaque de support (21) est en forme de U et la cage de fils d'armature (18) est disposée à travers l'ouverture du U et adjacente aux deuxièmes branches (23B) des barres d'armature (23), ou bien la plaque de support (22) est de forme rectangulaire et, lors de la disposition de la cage de fils d'armature (18), les extrémités libres des fils d'armature (23) s'étendant longitudinalement dans la cage de fils d'armature (18) sont insérées dans d'autres trous (27) de la plaque de support (22), ou bien, la plaque de support (22) est de forme rectangulaire et la cage de fils d'armature (18) est disposée sur la plaque de support (22) et repose sur celle-ci.

10. Procédé selon l'une quelconque des revendications 7 à 9 précédentes, **caractérisé en ce que** le support (19) comporte un pied (29) disposé sur le substrat et pourvu d'un trou, et un tube vertical (31) disposé autour du trou et fixé au pied (29) sur lequel se trouve la plaque de support (21) ou autour duquel est disposée la plaque de support (21) pourvue d'un trou central.

11. Module fabriqué selon le procédé selon l'une quelconque des revendications 7 à 10 précédentes, comprenant :
- une dalle en béton coulé (3) munie d'un treillis métallique d'armature (9),
- une poutre en béton coulé (13) fixée à la dalle (3) et munie d'un panier métallique d'armature allongé (11),
- une plaque de support (21) située sur ou à côté de la poutre en béton (13),
- une colonne en béton (15) située sur la plaque de support (21), fixée à la dalle (3) et munie d'une cage métallique d'armature allongée (18), laquelle colonne (15) comprend une paroi périphérique fabriquée par impression 3D de béton, à l'intérieur de laquelle se trouve la cage métallique d'armature (18) et dans laquelle le béton a été coulé, et
- un mur creux (5) fixée à la dalle (3), la paroi creuse (5) comportant deux parois espacées (6) fabriquées par impression 3D de béton,
le béton la poutre (13) et le poteau en béton (15) sont fixés l'un à l'autre par le panier de fils d'armature (11) et la cage de fils d'armature (18) et/ou par des barres d'armature (23).

12. Module selon la revendication 11, **caractérisé en ce qu'**il comprend en outre un support (19) sur lequel repose la plaque de support (21) et qui est situé à proximité de la poutre en béton (13), les barres d'armature coudées (23) sont disposées avec une première branche (23A) s'étendant dans la cage de fils d'armature (11) et avec une seconde branche (23B) s'étendant dans le sens longitudinal du poteau (15) dans la cage de fils d'armature (18) ou sous la plaque de support (21), ce support (19) comprend en outre un pied (29) percé d'un trou et un tube (31) fixé au pied autour du trou.

13. Module selon la revendication 12, **caractérisé en ce que** le tube (31) traverse un trou de la plaque de support (22) et dépasse partiellement de celle-ci, il est percé de plusieurs trous dans sa paroi latérale, ces trous, reliés à des éléments traversants (37), sont montés sur la paroi latérale du tube (31), des boulons (39) sont vissés dans le tube (31) pour extraire une tige (41) éventuellement présente dans le collier de serrage.

14. Module selon la revendication 13, **caractérisé en ce qu'**une ouverture (43) est ménagée dans la paroi périphérique (16) de la colonne (15) à l'emplacement des boulons (39), par laquelle ces derniers sont accessibles.

15. Bâtiment comprenant plusieurs modules selon la revendication 13 ou 14, dont plusieurs modules (1) sont présents sur d'autres modules, dans lequel dans au moins une colonne (15) d'un module inférieur est présente une tige (41) qui dépasse partiellement de la colonne et s'étend dans le tube (31) du support (19) du module présent sur ce module et est serrée par les boulons (39).
